# EUROPÄISCHE PATENTSCHRIFT

(11) **EP 2 037 099 B1**
(45) Veröffentlichungstag und Bekanntmachung des Hinweises auf die Patenterteilung: **28.12.2011**
(21) Anmeldenummer: 08015163.2
(22) Anmeldetag: 28.08.2008
(51) Int. Cl.: F02B 31/06, F02D 9/10, F02B 31/00, F02D 41/00, F02D 23/00, F02D 29/06, F02D 31/00

(54) **Brennkraftmaschinen sowie Motorregeleinrichtung**
Combustion machines and motor regulating device
Moteurs à combustion interne et dispositif de réglage de moteur

(30) Priorität: 13.09.2007 AT 14332007
(43) Veröffentlichungstag der Anmeldung: 18.03.2009
(73) Patentinhaber: GE Jenbacher GmbH & Co OHG, 6200 Jenbach (AT)
(72) Erfinder: Greuter, Rainer, 6112 Wattens (AT); Hirzinger, Johann, 6345 Kössen (AT); Klausner, Johann, 6391 St. Jacob i.H. (AT)
(74) Vertreter: Hofinger, Stephan

(56) Entgegenhaltungen:
- EP-A- 1 158 149
- EP-A2- 0 757 169
- DE-A1- 3 939 754
- DE-A1- 10 329 763
- GB-A- 2 105 878
- US-B1- 6 244 050

## Beschreibung

Die Erfindung betrifft einerseits ein Verfahren zum Betreiben einer stationären Brennkraftmaschine, insbesondere eines Gasmotors, mit einer Verdichtungseinrichtung mit variabler Verdichtergeometrie, welche der Brennkraftmaschine zugeführtes Gas verdichtet, und mit einer der Verdichtungseinrichtung nachgeschalteten Drosseleinrichtung, mit welcher die Menge des der Brennkraftmaschine zugeführten verdichteten Gases veränderbar ist, wobei die Brennkraftmaschine über die Betätigung von zumindest zwei Stellgliedern geregelt wird. Andererseits betrift die Erfindung eine Regeleinrichtung zur Regelung zumindest einer Motorregelgröße einer stationären Brennkraftmaschine mit einer Verdichtungseinrichtung und mit einer Drosseleinrichtung, wobei über die Regeleinrichtung zumindest zwei Stellglieder beeinflussbar sind. Schließlich betrifft die Erfindung eine stationäre Brennkraftmaschine, insbesondere Gasmotor, mit einer Verdichtungseinrichtung mit variabler Geometrie zum Verdichten von dem Motor zugeführten Gas und einer der Verdichtungseinrichtung nachgeschalteten Drosseleinrichtung zur Mengenbeschränkung des der Brennkraftmaschine zugeführten verdichteten Gases sowie einen Generator mit einer solchen Brennkraftmaschine.

Um bei einer Brennkraftmaschine, wie einem Verbrennungsmotor, insbesondere einem stationären Gasmotor, eine Motorregelgröße, wie die Leistung oder die Drehzahl, zu regeln, stehen meist mehrere Stellglieder an der Brennkraftmaschine zur Verfügung. In erster Linie wird die Drosselklappe im Ansaugtrakt als Stellglied betätigt. Bei einer aufgeladenen Brennkraftmaschine kann man die Leistung oder Drehzahl z.B. zusätzlich über ein steuerbares Ventil (Umblaseventil) als zweitem Stellglied beeinflussen, das parallel zum Verdichter im Ansaugtrakt des Verbrennungsmotors angeordnet ist. In der EP 0 757 169 B1 wird beispielsweise eine Regelung vorgeschlagen, bei der die Motorregelgröße in unterschiedlichen Betriebszuständen bei unterschiedlichen Leistungen oder Drehzahlen über Verstellung jeweils einer Stellgliedes geregelt wird. Dabei wird jeweils immer nur ein Stellglied von einem zugeordneten Regler verstellt, während das andere Stellglied in fester Stellung gehalten wird. Konkret schlägt die EP 0 757 169 B1 als jeweilige Stellglieder zur Regelung der Motorgröße vor, die Drosselklappenstellung und die Öffnung des Umblaseventils zu ändern. Eine solche Regelung erweist sich vorteilhaft beim Betrieb in unterschiedlichen Betriebszuständen.

Häufig werden gattungsgemäße stationäre Brennkraftmaschinen zur Gewinnung von Strom im Inselbetrieb oder Notstrombetrieb oder zum Netzparallelbetrieb herangezogen. Abhängig vom jeweiligen Betrieb, ist es erforderlich, die Ausgangsleistung oder die Drehzahl der Brennkraftmaschine konstant zu halten. Die Störanfälligkeit und die zunehmende Sensitivität der von einer solchen Brennkraftmaschine direkt oder indirekt angetrieben elektrischen Einrichtung machen es erforderlich, dass die jeweilige Motorgröße auch in wechselnden Situationen mit höchster Präzision konstant gehalten wird. Wechselnde Situationen können z.B. durch Störeinflüsse oder Laständerungen auftreten.

Aufgabe der vorliegenden Erfindung ist es daher, ein Verfahren sowie Einrichtungen der eingangs genannten Gattung zu schaffen, mit denen eine höhere Regelgenauigkeit auf eine bestimmte - beispielsweise konstante - Motorregelgröße erzielbar sind.

Diese Aufgabe wird durch die Merkmale der unabhängigen Ansprüche gelöst.

Das entsprechende Verfahren zum Betreiben einer stationären Brennkraftmaschine, insbesondere eines Gasmotors, mit einer Verdichtungseinrichtung mit variabler Verdichtergeometrie, welche der Brennkraftmaschine zugeführtes Gas verdichtet, und mit einer der Verdichtungseinrichtung nachgeschalteten Drosseleinrichtung, mit welcher die Menge des der Brennkraftmaschine zugeführten verdichteten Gases veränderbar ist, wobei die Brennkraftmaschine über die Betätigung von zumindest zwei Stellgliedern geregelt wird, ist dadurch gekennzeichnet, dass die Brennkraftmaschine auf eine - vorzugsweise im Wesentlichen konstante - Motorregelgröße geregelt wird und dass bei einer Abweichung der Motorregelgröße von einem Sollwert durch die Betätigung der Drosseleinrichtung als erstem Stellglied und durch die Veränderung der Geometrie der Verdichtungseinrichtung als zweitem Stellglied die der Brennkraftmaschine zugeführte Gasmenge verändert wird, sodass die Motorregelgröße auf den Sollwert nachgeführt wird.

Eine entsprechende Regeleinrichtung zur Regelung zumindest einer Motorregelgröße einer stationären Brennkraftmaschine mit einer Verdichtungseinrichtung und mit einer Drosseleinrichtung, wobei über die Regeleinrichtung zumindest zwei Stellglieder beeinflussbar sind, insbesondere für die Durchführung eines Verfahrens der vorgenannten Art ist dadurch gekennzeichnet, dass ein erstes Stellglied zum Verändern der Stellung der Drosseleinrichtung vorgesehen ist, und dass ein zweites Stellglied zum Verändern der Geometrie der Verdichtungseinrichtung vorgesehen ist, wobei im Betriebszustand bei einer Regelabweichung der Motorregelgröße vom Sollwert die der Brennkraftmaschine zugeführte Gasmenge über die Regeleinrichtung regelbar ist, indem die Stellung der Drosseleinrichtung als erstem Stellglied und die Geometrie der Verdichtungseinrichtung als zweitem Stellglied veränderbar ist

Die entsprechende stationäre Brennkraftmaschine, insbesondere ein Gasmotor, mit einer Verdichtungseinrichtung mit variabler Geometrie zum Verdichten von dem Motor zugeführten Gas und einer der Verdichtungseinrichtung nachgeschalteten Drosseleinrichtung zur Mengenbeschränkung des der Brennkraftmaschine zugeführten verdichteten Gases, ist gekennzeichnet durch eine Regeleinrichtung, vorzugsweise der vorgenannten Art, und zumindest zwei Stellglieder, wobei die Regeleinrichtung im Betriebszustand die Brennkraftmaschine auf eine - vorzugsweise im Wesentlichen konstante - Motorregelgröße über die Veränderung der zumindest zwei Stellglieder regelt, indem die Regeleinrichtung die Drosseleinrichtung als erstes Stellglied betätigt und die Geometrie der Verdichtungseinrichtung als zweites Stellglied verändert

Der Erfindung liegt die idee zugrunde, zwei Stellglieder für die Regelung heranzuziehen, mit denen rasch die der Brennkraftmaschine zugeführte Gasmenge direkt variierbar ist. Ein Vorteil der Erfindung liegt auch darin, dass in den Einlasstrakt keine zusätzlichen Volumina durch Bypassleitungen eingebracht werden müssen, durch die es zu einer Regelverzögerung kommen würde. Sowohl durch die Veränderung der Geometrie in der Verdichtungseinrichtung als auch durch die Drosselklappenstellung wird unmittelbar und direkt auf die der Brennkraftmaschine zugeführte Gasmenge eingewirkt.

Weitere Details und Vorteile der Erfindung ergeben sich aus den abhängigen Ansprüchen.

Für das Verfahren kann insbesondere zusätzlich vorgesehen sein, dass die Brennkraftmaschine einen Generator betreibt. In diesem Fall ist - insbesondere beim Inselbetrieb oder Notstrombetrieb - bevorzugt vorgesehen, dass der Generator mit konstanter Drehzahl und damit mit fester Frequenz geregelt wird, da so die Gefahren einer Beschädigung an empfindlichen Endgeräten minimiert wird.

Beim Netzparallelbetrieb ist besonders vorteilhaft vorgesehen, dass die Brennkraftmaschine auf konstante Leistung geregelt wird. In diesem Fall wird z.B. beim Generatorbetrieb stets eine konstante Energiemenge in ein Netz eingespeist.

Für das Verfahren kann weiters vorgesehen sein, dass die Brennkraftmaschine einen Generator oder mechanischen Direktantrieb betreibt. In diesem Fall ist besonders bevorzugt vorgesehen, dass die Brennkraftmaschine auf konstante Drehzahl geregelt wird und/oder die Brennkraftmaschine auf konstante Ausgangsleistung geregelt wird. Günstig ist es weiters, wenn die Verdichtungseinrichtung über eine Abgasturbine betrieben wird, da so kein zusätzlicher Antrieb für die Verdichtungseinrichtung erforderlich ist.

Weiters ist günstigerweise vorgesehen, dass das der Drosseleinrichtung zuströmende Gas gekühlt wird, wobei in einem Ausführungsbeispiel vorteilhaft vorgesehen ist, dass das der Verdichtungseinrichtung zugeführte Gas ein Treibstoff/Luftgemisch ist.

Abhängig von der jeweiligen Abweichung der Motorregelgröße vom entsprechenden Sollwert, kann es vorteilhaft sein, wenn die Veränderung der Geometrie der Verdichtungseinrichtung zumindest zeitweise verzögert und/oder langsamer erfolgt als die Betätigung der Drosseleinrichtung. In anderen Lastbereichen kann günstigerweise vorgesehen sein, dass die Drosseleinrichtung und die Veränderung der Geometrie der Verdichtungseinrichtung zumindest zeitweise im Wesentlichen synchron erfolgt. Schließlich kann es vorteilhaft sein, wenn in einem Lastbereich - vorzugsweise im oberen Lastbereich - zumindest zeitweise bei Laständerungen von unter 5% die Drosseleinrichtung in konstanter Stellung, vorzugsweise in vollständig geöffneter Stellung, gehalten wird und die Nachführung auf die Motorregelgröße über die Veränderung der Geometrie der Verdichtungseinrichtung erfolgt.

Die drei zuletzt genannten Möglichkeiten können untereinander in den einzelnen Lastbereichen kombiniert werden, wobei unter dem oberen Lastbereich insbesondere jener zu verstehen ist mit mehr als 50% der Maximalleistung. Abhängig von der jeweiligen Reglercharakteristik kann aber auch nur eine der drei Varianten vorgesehen sein.

Eine entsprechende Regeleinrichtung weist bevorzugt zumindest zwei Regler auf, wobei der jeweiligen Stellgröße jeweils zumindest ein Regler zugeordnet ist. In Abhängigkeit von der jeweiligen Situation, für die die Regeleinrichtung eingesetzt wird, können die Regler unterschiedlich ausgebildet sein. Bevorzugt ist vorgesehen, dass zumindest einige der Regler PID-Regler sind. Unterschiedliche Reglercharakteristiken (beispielsweise Verzögerungen, verlangsamte Regelung oder Stellbetrieb) können beispielsweise durch Vorschalten eines Totbandes, d.h. einer Wartezeit, bevor der Regler einsetzt, unterschiedliche Integralteile in PID-Regler oder Stellbetriebsansätze etc. nach an sich bekannter Art erzielt werden.

Es ist dabei vorgesehen, dass die wenigstens zwei Regler derart ausgebildet sind, dass die Veränderung der Geometrie der Verdichtungseinrichtung gegenüber der Beeinflussung der Stellung der Drosseleinrichtung zumindest zeitweise verzögert erfolgt.

Weiters kann vorgesehen sein, dass die Regeleinrichtung derart ausgebildet ist, dass zumindest zeitweise vorzugsweise im oberen Lastbereich bei einer Abweichung der Motorregelgröße von unter 5% vom Sollwert die Drosseleinrichtung in im Wesentlichen konstanter Stellung gehalten wird und die Regelung im Wesentlichen über die Veränderung der Geometrie der Verdichtungseinrichtung erfolgt. Schließlich kann vorgesehen sein, dass die Regeleinrichtung derart ausgebildet ist, dass sie bei einer Abweichung der Regelgröße von zumindest 5% vom Sollwert, beide Stellgrößen vorzugsweise synchron - beeinflusst sowie dass der Regeleinrichtung eine Stellgrößenbeschränkung zugeordnet ist, sodass die Betätigung zumindest eines Stellgliedes derart beschränkt ist, dass die der Brennkraftmaschine zugeführte Gasmenge einen vorzugsweise vorgebbaren Maximalwert nicht überschreitet und/oder dass zumindest ein Regler ein Totband zur Verzögerung der Veränderung des Stellgliedes aufweist. Die Regeleinrichtung kann vorzugsweise zumindest einen PID-Regler aufweisen.

Die stationäre Brennkraftmaschine, insbesondere ein Gasmotor, kann weiters gekennzeichnet sein, dadurch, dass die Motorregelgröße konstante Drehzahl der Brennkraftmaschine ist. Es kann auch vorgesehen sein, dass die Motorregelgröße konstante Ausgangsleistung der Brennkraftmaschine ist. Für die Brennkraftmaschine ist bevorzugt vorgesehen, dass die Verdichtungseinrichtung über eine Abgasturbine betreibbar ist. Weiters kann vorgesehen sein, dass zwischen Verdichtungseinrichtung und Drosseleinrichtung eine Kühleinrichtung angeordnet ist mit welcher das der Drosseleinrichtung zuströmende Gas kühlbar ist. Weiters kann vorgesehen sein, dass der Kühleinrichtung eine Mischeinrichtung vorgeschaltet ist in der Treibstoff und Luft mischbar sind.

Die Brennkraftmaschine kann in einer vorteilhaften Ausführungsvariante eine Verdichtungseinrichtung aufweisen, die über eine Abgasturbine betreibbar ist. Weiters ist vorgesehen, dass die Motorregelgröße die Leistung und/oder die Drehzahl der Brennkraftmaschine ist.

Die Erfindung betrifft außerdem einen Generator mit einer zuvorgenannten Brennkraftmaschine und einer zuvor genannten Regeleinrichtung für die Brennkraftmaschine.

Weitere Details und Vorteile der Erfindung werden anhand der schematischen Figuren und Figurenbeschreibungen erläutert. Es zeigt
- Fig. 1: schematisch ein Ausführungsbeispiel einer erfindungsgemäßen Brennkraftmaschine mit Generator und
- Fig. 2: ein Ausführungsbeispiel einer erfindungsgemäßen Regeleinrichtung.

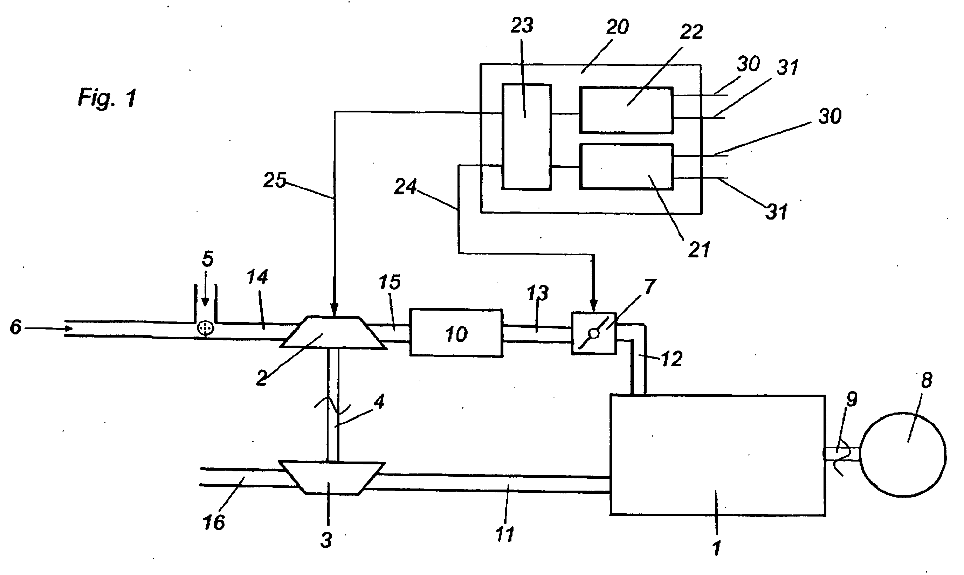

In der Fig. 1 ist eine stationäre Brennkraftmaschine 1 dargestellt. Das gezeigte Ausführungsbeispiel stellt einen Gasmotor da. Der Brennkraftmaschine 1 wird Luft 5 und Treibstoff 6 zugeführt, indem die Luft 5 und der gasförmige Treibstoff 6 am Knotenpunkt vermischt werden (der Knotenpunkt bildet somit eine Mischeinrichtung). Luft 5 und Treibstoff 6 bilden ein Gasgemisch, das der Verdichtungseinrichtung 2 über die Leitung 14 zugeführt wird. Die Verdichtungseinrichtung 2 ist über eine Welle 4 mit einer Abgasturbine 3 verbunden, die im Abgastrakt 11 der Brennkraftmaschine 1 angeordnet ist. Die Abgasturbine 3 wird über die Abgase der Brennkraftmaschine 1 betrieben. Die Verdichtungseinrichtung 2 weist eine variable Verdichtergeometrie nach an sich bekanntem Stand der Technik auf. Beispielsweise sind Schaufeln oder Flügel in der Verdichtungseinrichtung 2 angeordnet, die durch einen Aktuator (nicht gezeigt) betätigbar sind und so die Stellung in der Verdichtungseinrichtung 2 ändern. Auf diese Weise lässt sich der Gasstrom in der Verdichtungseinrichtung 2 verändern, wodurch es in der Verdichtungseinrichtung 2, zu einer höheren oder geringeren Verdichtung des Gases (hier Luft 5 und Treibstoff 6 -Gemisch) kommt, was eine unmittelbare Auswirkung auf die Leistung p. der Brennkraftmaschine 1 hat. Ober die der Verdichtungseinrichtung 2 nachgeschaltete Leitung 15 wird das nunmehr verdichtete Treibstoff/Luftgemisch (verdichtetes Gas gemäß Patentanspruch) einer Kühleinrichtung 10 zugeführt, da das verdichtete Treibstoff/Luftgemisch durch die Verdichtung stark erwärmt wird. Der Kühleinrichtung 10 ist eine Leitung 12 nachgeschaltet, die zur Drosseleinrichtung 7 (Drosselklappe) führt, die die Menge an Treibstoff/Luftgemisch über die Leitung 12 zur Brennkraftmaschine 1 reguliert. Gemäß EP 0 757 169 B1 wäre zwischen Leitung 13 (welche zwischen Verdichtungseinrichtung 2 und Drosselklappe 7 angeordnet und im gezeigten Ausführungsbeispiel auch noch der optionalen Kühleinrichtung 10 nachgeschaltet ist) und Leitung 14 eine Bypassleitung mit Ventil angeordnet (Umblaseventil), mit der ebenfalls die Menge an Gemisch regulierbar ist. Auf eine solche Bypasslassleitung kann bei der erfindungsgemäßen Einrichtung verzichtet werden, es besteht aber auch die Möglichkeit, sie hinzuzufügen, um ein drittes Stellglied für die Regelung zu haben.

Die dargestellte Brennkraftmaschine 1 treibt über eine Welle 9 einen Generator 8 an. An dieser Stelle wird auch die tatsächliche Ausgangsleistung pᵢₛₜ oder die Motordrehzahl nᵢₛₜ ermittelt, die als Motorregelgrößen dienen. Die eigentliche Regeleinrichtung ist mit dem Bezugszeichen 20 versehen. Die Regeleinrichtung 20 weist zwei Regler 21, 22 auf. Regler 21 ist dabei der Drosselklappe 7 zugeordnet (Drosselklappenregler 21). Regler 22 ist dem Stellglied zur Veränderung der Geometrie an der Verdichtungseinrichtung 2 zugeordnet (VLR-Regler 22). Beiden Reglern 21, 22 wird die (beispielsweise durch Sensoren erfasste) Motorregelgröße 30, bevorzugt Leistung pᵢₛₜ oder Drehzahl nᵢₛₜ, zugeführt. Der jeweilige Sollwert 31 (pₛₒₗₗ oder nₛₒₗₗ) wird sowohl dem Drosselklappenregler 21 als auch dem VLR-Regler 22 zugeführt. Die jeweiligen Regler 21, 22 bilden die Regelabweichung durch Vergleich des Istwertes der Motorregelgröße 30 mit dem Sollwert 31. Daraus ermittelt der jeweilige Regler 21, 22 ein entsprechendes Signal, das über das entsprechende Stellglied (Drosselklappe 7 oder Mittel zur Veränderung der Geometrie der Verdichtungseinrichtung 2) auf die Regelstrecke einwirkt und der Regelabweichung entgegenwirkt. Das entsprechende Signal wird über die Leitungen 24, 25 den entsprechenden Stellgliedern 7, 2 zugeführt. Im gezeigten Ausführungsbeispiel ist noch eine Verknüpfungseinnchtung 23 vorgesehen, sodass die beiden Regler 21, 22 aufeinander abgestimmt werden und nur bei entsprechender Regelabweichung beide oder nur eine Stellglied 7,3 wie oben beschrieben beeinflusst wird.

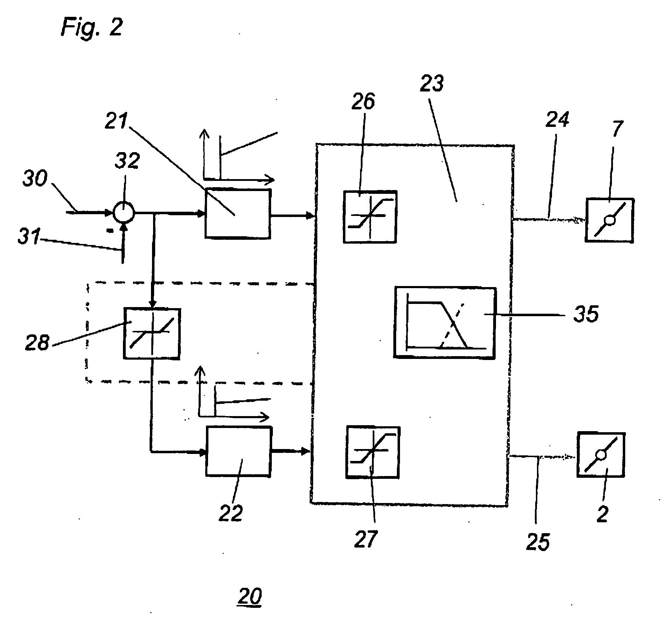

Am Verknüpfungspunkt 32 (Fig. 2) wird die Differenz zwischen Sollwert 30 und Istwert 31 gebildet und dem Regler 21 oder 22 zugeführt. Die Regler können z.B. als PID-Regler oder PI-Regler ausgebildet sein. Andere Regler (wie beispielsweise Stellbetrieb) sind selbstverständlich auch denkbar. Aus der entsprechenden Regelabweichung wird beispielsweise mit einem PID-Regler die Motorregelgröße nachgeführt, indem die entsprechenden Stellglieder 7, 2 mit einem Signal über die Signalleitungen 24, 25 betätigt werden. Damit es zu keiner "Überregelung", verbunden mit einer Beschädigung oder Beeinträchtigung der Brennkraftmaschine 1 kommt, können noch Stellgrößenbeschränker 26, 27 nachgeschaltet werden, sodass die Drosselklappe 7 nur auf einen Maximalwert von beispielsweise 30% geöffnet werden kann. Ähnlich können die entsprechenden Mittel zur Änderung der Geometrie der Verdichtungseinrichtung 2 entsprechend beschränkt werden.

Die Fig. 2 zeigt ein bevorzugtes Ausführungsbeispiel, wie eine entsprechende Regeleinrichtung 20 in der Praxis aussehen könnte. Am Verknüpfungspunkt 32 wird Sollwert 30 mit Istwert 31 verglichen und das entsprechende Signal an den Drosselklappenregler 21 und den VLR-Regler 22 übermittelt. Dem VLR-Regler 22 ist ein Totband 28 vorgeschaltet, sodass dieser Regler verzögert eingreifen könnte. Beispielsweise könnte eine Verzögerung von Sekundenbruchteilen vorgesehen sein, um bei einer nur sehr kurzen Schwankung im Motorregelsignal keine übermäßige Regelung zu verursachen. Auch ist die Reglercharakteristik der beiden Regler 21, 22 entsprechend unterschiedlich, wie dies in den oberhalb der Regler 21, 22 dargestellten Diagrammen angedeutet ist. Der Drosselklappenregler 21 ist im Beispiel ein PID-Regler mit steilerem Integralteil als der VLR-Regler 22, sodass auch hierdurch die Regelung stärker über die Drosselklappe 7 als über die Geometrieänderung der Verdichtungseinrichtung 2 erfolgt. Den beiden Reglern 21, 22 ist eine Logik 23 nachgeschaltet, die eine Stellgrößenbeschränkung 26 bzw. 27 für die jeweilige Stellgröße darstellt, sodass aus Sicherheitsgründen vom Reglerausgang kein zu großes Stellsignal an die Drosselklappe 7 oder die Verdichtungseinrichtung 2 übermittelt wird.

Mit dem Bezugszeichen 35 ist eine mögliche Umschaltlogik 35 symbolisch dargestellt, die den jeweils dominierenden Regler charakterisiert (%-Regler als Funktion der Last). Wie oben ausgeführt, ist in einem Ausführungsbeispiel vorgesehen, dass im oberen Lastbereich der VLR-Regler 22 (strichlierte Linie) die Hauptregelung übernimmt, während im unteren Lastbereich der Drosselklappenregler 21 (durchgezogene Linie) die Hauptregelung übernimmt. Im Übergangsbereich, insbesondere am Schnittpunkt der beiden Linien ist eine gleichberechtigte Regelung von Drosselklappenregler 21 und VLR-Regler vorgesehen. Andere Kurvenverläufe sind natürlich auch denkbar, gezeigt ist lediglich ein bevorzugtes Ausführungsbeispiel. Im Fall einer Störgrößenaufschaltung (zB Lastschaltung und einem damit verbundenen Drehzahleinbruch) könnte ein Stellbetrieb des Vorleitrades vorgesehen sein und die Rückkehr zum ausgeregelten Zustand über einen PID-Ansatz am VLR-Regler erfolgen. Beim Stellbetrieb kann vorgesehen sein, dass für jene Fälle, wo der Sollwert der Motorregelgröße eine vorgegebene maximale Abweichung überschreitet, das entsprechende Stellglied (insbesondere die Geometrie an der Verdichtungseinrichtung) nicht in direkter (zB proportionaler) Relation zur Regelabweichung betätigt wird, sondem auf einen bestimmten Wert geändert wird (zB kann eine vollständige Öffnung vorgesehen sein). Günstigerweise erfolgt dies, falls ein vorgeschaltetes Totband vorgesehen ist nach Überschreiten des Totbandes.

## Patentansprüche

1. Verfahren zum Betreiben einer stationären Brennkraftmaschine (1) mit einer Verdichtungseinrichtung (2) mit variabler Verdichtergeometrie, welche der Brennkraftmaschine (1) zugeführtes Gas (5, 6) verdichtet, und mit einer der Verdichtungseinrichtung (2) nachgeschalteten Drosseleinrichtung (7), mit welcher die Menge des der Brennkraftmaschine zugeführten verdichteten Gases (5, 6) veränderbar ist, wobei die Brennkraftmaschine (1) über die Betätigung von zumindest zwei Stellgliedern geregelt wird, **dadurch gekennzeichnet, dass** die Brennkraftmaschine (1) auf eine Motorregelgröße geregelt wird, und dass bei einer Abweichung der Motorregelgröße von einem Sollwert durch die Betätigung der Drosseleinrichtung (7) als erstem Stellglied und durch die Veränderung der Geometrie der Verdichtungseinrichtung (2) als zweitem Stellglied die der Brennkraftmaschine (1) zugeführte Gasmenge verändert wird, sodass die Motorregelgröße auf den Sollwert nachgeführt wird, wobei die Veränderung der Geometrie der Verdichtungseinrichtung (2) zumindest zeitweise verzögert gegenüber der Betätigung der Drosseleinrichtung und/oder langsamer als die Betätigung der Drosseleinrichtung (7) erfolgt.

2. Verfahren nach Anspruch 1, **dadurch gekennzeichnet, dass** die Drosseleinrichtung (7) und die Veränderung der Geometrie der Verdichtungseinrichtung (2) zumindest zeitweise im Wesentlichen synchron erfolgen.

3. Verfahren nach Anspruch 1 oder 2, **dadurch gekennzeichnet, dass** in einem Lastbereich - vorzugsweise im oberen Lastbereich - zumindest zeitweise bei einer Abweichung der Motorregelgröße von unter 5% von einem Sollwert die Drosseleinrichtung (7) in konstanter Stellung, vorzugsweise in vollständig geöffneter Stellung, gehalten wird und die Nachführung auf den Sollwert der Motorregelgröße über die Veränderung der Geometrie der Verdichtungseinrichtung (2) erfolgt.

4. Verfahren nach einem der Ansprüche 1 bis 3, **dadurch gekennzeichnet, dass** zumindest ein Totband (28) vorgesehen ist, das die Veränderung eines Stellgliedes verzögert, wobei bevorzugt vorgesehen ist, dass bei Vorliegen einer Abweichung der Motorregelgröße von einem vorgegebenen Maximalwert nach Überschreiten des Totbandes (28) ein Stellbetrieb vorgesehen ist, wobei bevorzugt vorgesehen ist, dass der Stellbetrieb die Geometrie der Verdichtungseinrichtung (2) im Wesentlichen vollständig öffnet.

5. Regeleinrichtung zur Regelung zumindest einer Motorregelgröße einer stationären Brennkraftmaschine mit einer Verdichtungseinrichtung und mit einer Drosseleinrichtung, wobei über die Regeleinrichtung zumindest zwei Stellglieder beeinflussbar sind, **dadurch gekennzeichnet, dass** ein erstes Stellglied zum Verändern der Stellung der Drosseleinrichtung (7) vorgesehen ist, und dass ein zweites Stellglied zum Verändern der Geometrie der Verdichtungseinrichtung (2) vorgesehen ist, wobei im Betriebszustand bei einer Regelabweichung der Motorregelgröße vom Sollwert die der Brennkraftmaschine zugeführte Gasmenge über die Regeleinrichtung regelbar ist, indem die Stellung der Drosseleinrichtung (7) als erstem Stellglied und die Geometrie der Verdichtungseinrichtung (2) als zweitem Stellglied veränderbar ist, wobei den beiden Stellgrößen jeweils zumindest ein Regler (21, 22) zugeordnet ist, wobei die wenigstens zwei Regler (21, 22) derart ausgebildet sind, dass die Veränderung der Geometrie der Verdichtungseinrichtung (2) gegenüber der Beeinflussung der Stellung der Drosseleinrichtung (7) zumindest zeitweise verzögert erfolgt.

6. Regeleinnchtung nach Anspruch 5, **dadurch gekennzeichnet, dass** die Regeleinrichtung die Motorregelgröße auf einen im Wesentlichen konstanten Sollwert regelt.

7. Regeleinrichtung nach Anspruch 5 oder Anspruch 6, **dadurch gekennzeichnet, dass** die Motorregelgröße die Leistung (p) und/oder die Drehzahl (n) der Brennkraftmaschine ist.

8. Regeleinrichtung nach einem der Ansprüche 5 bis 7, **dadurch gekennzeichnet, dass** die Regeleinrichtung (20) derart ausgebildet ist, dass zumindest zeitweise - vorzugsweise im oberen Lastbereich - bei einer Abweichung der Motorregelgröße von unter 5% von einem Sollwert die Drosseleinrichtung (7) in im Wesentlichen konstanter Stellung gehalten wird und die Regelung im Wesentlichen über die Veränderung der Geometrie der Verdichtungseinrichtung (2) erfolgt.

9. Regeleinrichtung nach einem der Ansprüche 5 bis 8, **dadurch gekennzeichnet, dass** die Regeleinrichtung (20) derart ausgebildet ist, dass bei einer Abweichung der Motorregelgröße von zumindest 5% von einem Sollwert beide Stellgrößen beeinflusst werden, wobei bevorzugt vorgesehen ist, dass beide Stellgrößen synchron beeinflusst werden.

10. Regeleinrichtung nach einem der Ansprüche 5 bis 9, **dadurch gekennzeichnet, dass** der Regeleinrichtung (20) eine Stellgrößenbeschränkung (26, 27) zugeordnet ist, sodass die Betätigung zumindest eines Stellgliedes derart beschränkt ist, dass die der Brennkraftmaschine zugeführte Gasmenge einen Maximalwert nicht überschreitet, wobei bevorzugt vorgesehen ist, dass der Maximalwert vorgebbar ist.

11. Regeleinrichtung nach einem der Ansprüche 5 bis 10, **dadurch gekennzeichnet, dass** zumindest ein Regler ein Totband (28) zur Verzögerung der Veränderung des Stellgliedes aufweist bzw. dass zumindest einem Regler ein Totband (28) zur Verzögerung der Veränderung des Stellgliedes vorgeschalten ist, wobei bevorzugt vorgesehen ist, dass das Totband (28) derart ausgebildet ist, dass es eine Abweichung der Regelgröße vom Sollwert von bis zu 5% zulässt.

12. Regeleinrichtung nach Anspruch 11, **dadurch gekennzeichnet, dass** bei einer Abweichung der Motorregelgröße um einen vorgebbaren Maximalwert nach Überschreiten des Totbandes (28) ein Stellbetrieb vorgesehen ist, wobei bevorzugt vorgesehen ist, dass der Stellbetrieb die Geometrie der Verdichtungseinrichtung (2) derart verändert, dass die Verdichtungseinrichtung (2) im Wesentlichen vollständig geöffnet ist.

13. Stationäre Brennkraftmaschine mit einer Verdichtungseinrichtung mit variabler Geometrie zum Verdichten von dem Motor zugeführten Gas und einer der Verdichtungseinrichtung nachgeschalteten Drosseleinrichtung zur Mengenbeschränkung des der Brennkraftmaschine zugeführten verdichteten Gases, **gekennzeichnet durch** eine Regeleinrichtung nach einem der Ansprüche 5 bis 12 und zumindest zwei Stellglieder, wobei die Regeleinrichtung im Betriebszustand die Brennkraftmaschine (1) auf eine Motorregelgröße über die Veränderung der zumindest zwei Stellglieder regelt, indem die Regeleinrichtung die Drosseleinrichtung (7) als erstes Stellglied betätigt und die Geometrie der Verdichtungseinrichtung (2) als zweites Stellglied verändert.

14. Brennkraftmaschine nach Anspruch 13, **dadurch gekennzeichnet, dass** die Brennkraftmaschine als Gasmotor ausgebildet ist.

15. Generator mit Brennkraftmaschine nach Anspruch 13 oder 14.

## Claims

1. A method of operating a stationary internal combustion engine (1), comprising a compressor device (2) of variable compressor geometry which compresses gas (5, 6) fed to the internal combustion engine (1), and a throttle device (7) which is connected downstream of the compressor device (2) and with which the amount of compressed gas (5, 6) fed to the internal combustion engine is variable, wherein the internal combustion engine (1) is regulated by way of the actuation of at least two adjusting members, **characterised in that** the internal combustion engine (1) is regulated to an engine regulating value, and upon a deviation in the engine regulating value from a reference value the amount of gas fed to the internal combustion engine (1) is altered by the actuation of the throttle device (7) as the first adjusting member and by the variation in the geometry of the compressor device (2) as the second adjusting member so that the engine regulating value is re-set to the reference value, wherein the variation in the geometry of the compressor device (2) is effected at least at times in delayed relationship with respect to and/or slower than the actuation of the throttle device (7).

2. A method according to claim 1, **characterised in that** the throttle device (7) and the variation in the geometry of the compressor device (2) are effected at least at times substantially synchronously.

3. A method according to claim 1 or 2, **characterised in that** in a load range - preferably in the upper load range - at least at times upon a deviation in the engine regulating value of below 5% from a reference value the throttle device (7) is held in a constant position, preferably in a completely opened position, and re-setting to the reference value of the engine regulating value is effected by way of the variation in the geometry of the compressor device (2).

4. A method according to one of claims 1 to 3, **characterised in that** there is provided at least one dead band (28) which delays the variation of an adjusting member, wherein it is preferably provided that in the presence of a deviation in the engine regulating value from a predetermined maximum value after the dead band (28) is exceeded an adjusting operating mode is provided, wherein it is preferably provided that the adjusting operating mode substantially completely opens the geometry of the compressor device (2).

5. A regulating device for regulating at least one engine regulating value of a stationary internal combustion engine comprising a compressor device and a throttle device, wherein at least two adjusting members can be influenced by way of the regulating device, **characterised in that** there is provided a first adjusting member for varying the position of the throttle device (7) and that there is provided a second adjusting member for varying the geometry of the compressor device (2), wherein in the operating state upon a regulating deviation of the engine regulating value from the reference value the amount of gas fed to the internal combustion engine can be regulated by way of the regulating device by the position of the throttle device (7) as the first adjusting member and the geometry of the compressor device (2) as the second adjusting member being variable, wherein at least one respective regulator (21, 22) is associated with the two adjusting values, wherein the at least two regulators (21, 22) are so designed that the change in the geometry of the compressor device (2) is effected at least at times in delayed relationship to the influencing of the position of the throttle device (7).

6. A regulating device according to claim 5, **characterised in that** the regulating device regulates the engine regulating value to a substantially constant reference value.

7. A regulating device according to claim 5 or 6, **characterised in that** the engine regulating value is the power (p) and/or the rotary speed (n) of the internal combustion engine.

8. A regulating device according to one of claims 5 to 7, **characterised in that** the regulating device (20) is so designed that at least at times - preferably in the upper load range - upon a deviation in the engine regulating value of below 5% from a reference value the throttle device (7) is held in a substantially constant position and regulation is effected substantially by way of the variation in the geometry of the compressor device (2).

9. A regulating device according to one of claims 5 to 8, **characterised in that** the regulating device (20) is so designed that both adjusting values are influenced - preferably synchronously - upon a deviation of the engine regulating value of at least 5% from a reference value.

10. A regulating device according to one of claims 5 to 9, **characterised in that** an adjusting value limitation (26, 27) is associated with the regulating device (20) so that the actuation of at least one adjusting member is limited in such a way that the amount of gas fed to the internal combustion engine does not exceed a maximum value, wherein it is preferably provided that the maximum value is predeterminable.

11. A regulating device according to one of claims 5 to 10, **characterised in that** at least one regulator has a dead band (28) for delaying the change in the adjusting member or that a dead band (28) for delaying the change in the adjusting member is disposed upstream of at least one regulator, wherein it is preferably provided that the dead band (28) is so designed that it permits a deviation in the regulating value from the reference value of up to 5%.

12. A regulating device according to claim 11, **characterised in that** an adjusting operating mode is provided upon a deviation in the engine regulating value by a predeterminable maximum value after the dead band (28) is exceeded, wherein it is preferably provided that the adjusting operating mode varies the geometry of the compressor device (2) in such a way that the compressor device (2) is substantially completely opened.

13. A stationary internal combustion engine, comprising a compressor device of variable geometry for compressing gas fed to the engine and a throttle device connected downstream of the compressor device for limiting the amount of compressed gas fed to the internal combustion engine, **characterised by** a regulating device according to one of claims 5 through 12, and at least two adjusting members, wherein the regulating device in the operating state regulates the internal combustion engine (1) to an engine regulating value by way of the variation of at least two adjusting members, by the regulating device actuating the throttle device (7) as a first adjusting member and varying the geometry of the compressor device (2) as a second adjusting member.

14. An internal combustion engine according to claim 13, **characterised in that** the internal combustion engine is a gas engine.

15. A generator having an internal combustion engine according to claim 13 or 14.

## Revendications

1. Procédé pour faire fonctionner un moteur à combustion interne stationnaire (1) avec un dispositif de compression (2) à géométrie variable qui comprime du gaz (5, 6) apporté au moteur à combustion interne (1), et avec un dispositif d'étranglement (7) monté en aval du dispositif de compression (2) et par lequel la quantité de gaz comprimé (5, 6) apportée au moteur à combustion interne peut être modifiée, le moteur à combustion interne (1) étant régulé en actionnant au moins deux organes de régulation, **caractérisé en ce que** le moteur à combustion interne (1) est régulé à une grandeur de réglage du moteur, et **en ce que**, en cas d'écart de la grandeur de réglage du moteur par rapport à une valeur de consigne, par l'actionnement du dispositif d'étranglement (7) comme premier organe de régulation et par la modification de la géométrie du dispositif de compression (2) comme deuxième organe de régulation, la quantité de gaz apportée au moteur à combustion interne (1) est modifiée, de sorte que la grandeur de réglage du moteur est réajustée à la valeur de consigne, la modification de la géométrie du dispositif de compression (2) s'effectuant au moins par moment avec retard par rapport à l'actionnement du dispositif d'étranglement et/ou plus lentement que l'actionnement du dispositif d'étranglement (7).

2. Procédé selon la revendication 1, **caractérisé en ce que** l'actionnement du dispositif d'étranglement (7) et la modification de la géométrie du dispositif de compression (2) s'effectuent au moins par moments de façon sensiblement synchrone.

3. Procédé selon la revendication 1 ou 2, **caractérisé en ce que**, dans une plage de charge - de préférence dans la plage supérieure de charge - au moins par moments, en cas d'écart de la grandeur de réglage du moteur inférieur à 5% par rapport à une valeur de consigne, le dispositif d'étranglement (7) est maintenu dans une position constante, de préférence en position totalement ouverte, et le réajustement à la valeur de consigne de la grandeur de réglage du moteur s'effectue au moyen de la modification de la géométrie du dispositif de compression (2).

4. Procédé selon l'une quelconque des revendications 1 à 3, **caractérisé en ce qu'**au moins une bande morte (28) est prévue, qui retarde la modification d'un organe de régulation, sachant que, de préférence, en cas d'écart de la grandeur de réglage du moteur par rapport à une valeur maximale prédéterminée, un mode de régulation est prévu à la suite du dépassement de la bande morte (28), le mode de régulation ouvrant de préférence sensiblement totalement la géométrie du dispositif de compression (2).

5. Dispositif de régulation pour réguler au moins une grandeur de réglage d'un moteur à combustion interne stationnaire avec un dispositif de compression et avec un dispositif d'étranglement, le dispositif de régulation permettant d'agir sur au moins deux organes de régulation, **caractérisé en ce qu'**un premier organe de régulation est prévu pour modifier la position du dispositif d'étranglement (7) et **en ce qu'**un deuxième organe de régulation est prévu pour modifier la géométrie du dispositif de compression (2), sachant qu'en situation de fonctionnement, lors d'un écart de régulation de la grandeur de réglage du moteur par rapport à la valeur de consigne, la quantité de gaz apportée au moteur à combustion interne peut être régulée au moyen du dispositif de régulation par le fait que la position du dispositif d'étranglement (7) comme premier organe de régulation et la géométrie du dispositif de compression (2) comme deuxième organe de régulation peuvent être modifiées, au moins un régulateur (21, 22) étant associé à chacune des deux variables de régulation, les au moins deux régulateurs (21, 22) étant conçus de telle sorte que la modification de la géométrie du dispositif de compression (2) s'effectue au moins par moment avec retard par rapport à l'influence exercée sur la position du dispositif d'étranglement (7).

6. Dispositif de régulation selon la revendication 5, **caractérisé en ce que** le dispositif de régulation régule la grandeur de réglage du moteur à une valeur de consigne sensiblement constante.

7. Dispositif de régulation selon la revendication 5 ou 6, **caractérisé en ce que** la variable réglée du moteur est la puissance (p) et/ou le régime (n) du moteur à combustion interne.

8. Dispositif de régulation selon l'une quelconque des revendications 5 à 7, **caractérisé en ce que** le dispositif de régulation (20) est conçu de telle sorte qu'au moins par moments - de préférence dans la plage supérieure de charge - en cas d'écart de la grandeur de réglage du moteur inférieur à 5% par rapport à une valeur de consigne, le dispositif d'étranglement (7) est maintenu dans une position sensiblement constante, et la régulation s'effectue pour l'essentiel au moyen de la modification de la géométrie du dispositif de compression (2).

9. Dispositif de régulation selon l'une quelconque des revendications 5 à 8, **caractérisé en ce que** le dispositif de régulation (20) est conçu de telle sorte que, en cas d'écart de la variable réglée du moteur d'au moins 5% par rapport à une valeur de consigne, on agit sur les deux variables de régulation, sachant qu'on agit de préférence de manière synchrone sur les deux variables de régulation.

10. Dispositif de régulation selon l'une quelconque des revendications 5 à 9, **caractérisé en ce qu'**une limitation de variable réglante (26, 27) est associée au dispositif de régulation (20), de sorte que l'actionnement d'au moins un organe de régulation est limité de telle sorte que la quantité de gaz apportée au moteur à combustion interne ne dépasse pas une valeur maximale, la valeur maximale étant de préférence prédéterminable.

11. Dispositif de régulation selon l'une quelconque des revendications 5 à 10, **caractérisé en ce qu'**au moins un régulateur présente une bande morte (28) pour retarder la modification de l'organe de régulation, ou **en ce qu'**une bande morte (28) est disposée en amont d'au moins un régulateur pour retarder la modification de l'organe de régulation, la bande morte (28) étant de préférence conçue de telle sorte qu'elle autorise un écart de la variable réglée par rapport à la valeur de consigne pouvant atteindre 5%.

12. Dispositif de régulation selon la revendication 11, **caractérisé en ce que**, en cas d'écart de la grandeur de réglage du moteur d'une valeur maximale prédéterminable, un mode de régulation est prévu à la suite du dépassement de la bande morte (28), le mode de régulation modifiant de préférence la géométrie du dispositif de compression (2) de telle sorte que le dispositif de compression (2) est sensiblement totalement ouvert.

13. Moteur à combustion interne stationnaire avec un dispositif de compression à géométrie variable pour comprimer du gaz apporté au moteur à combustion interne, et avec un dispositif d'étranglement monté en aval du dispositif de compression pour limiter la quantité de gaz comprimé apportée au moteur à combustion interne, **caractérisé par** un dispositif de régulation selon l'une quelconque des revendications 5 à 12 et par au moins deux organes de régulation, où le dispositif de régulation, en situation de fonctionnement, régule le moteur à combustion interne (1) à une grandeur de réglage du moteur au moyen de la modification des au moins deux organes de régulation, par le fait que le dispositif de régulation actionne le dispositif d'étranglement (7) comme premier organe de régulation et modifie la géométrie du dispositif de compression (2) comme deuxième organe de régulation.

14. Moteur à combustion interne selon la revendication 13, **caractérisé en ce que** le moteur à combustion interne est réalisé sous forme de moteur à gaz.

15. Génératrice avec un moteur à combustion interne selon la revendication 13 3 ou 14.
